# EUROPÄISCHE PATENTSCHRIFT

(11) **EP 2 929 768 B1**
(45) Veröffentlichungstag und Bekanntmachung des Hinweises auf die Patenterteilung: **21.09.2016**
(21) Anmeldenummer: 15158433.1
(22) Anmeldetag: 10.03.2015
(51) Int. Cl.: A01B 73/04, A01B 45/00

(54) **LANDWIRTSCHAFTLICHES GERÄT ZUR BODENBEARBEITUNG UND MASCHINENKOMBINATION**
AGRICULTURAL DEVICE FOR WORKING THE SOIL AND MACHINE COMBINATION
APPAREIL AGRICOLE POUR LE TRAITEMENT DES SOLS ET COMBINAISON DE MACHINES

(30) Priorität: 13.03.2014 DE 102014204688
(43) Veröffentlichungstag der Anmeldung: 14.10.2015
(73) Patentinhaber: Mayer, Johann, 82544 Egling-Ergertshausen (DE)
(72) Erfinder: Mayer, Johann, 82544 Egling-Ergertshausen (DE)
(74) Vertreter: Zinkler, Franz

(56) Entgegenhaltungen:
- US-A- 4 646 851

## Beschreibung

Die vorliegende Erfindung bezieht sich auf landwirtschaftliche Geräte, insbesondere zur Bodenbearbeitung, wie beispielsweise zur Bearbeitung von Ackerland oder Grünland.

Um hohe Erträge an Grünfutter auf Grünland zu erzeugen, ist eine effiziente und andauernde Grünlandpflege nötig. Hierzu existieren diverse Maschinen, die beispielsweise von der Güttler GmbH aus 7230 Kirchheim/Teck erworben werden können. Insbesondere Grünlandbearbeitungsgeräte wie beispielsweise ein Striegel für Grünland, der z.B. mit einer Walze gekoppelt werden kann, erleichtern die Grünland- oder Ackerpflege. Bei der Grünlandpflege dient der Striegel für Grünland zum Auskämmen von verfilzten Grasnaben. Außerdem dient der Striegel für Grünland auch zum Ausjäten der Gemeinen Rispe. Die Gemeine Rispe ist eine Grasart, die Platz auf Grünland einnimmt und damit die im Hinblick auf den landwirtschaftlichen Nutzen nützlicheren Weidelgräser verdrängt. Zur Bearbeitung eines Grünlands mit einem Grünlandstriegel werden die flachwurzelnden Gemeinen Rispen entfernt, so dass Lücken verbleiben, in denen dann die Nachsaat erfolgreich anwachsen kann. Dagegen sind die Weidelgräser tiefer verwurzelt und überstehen eine Grünlandbearbeitung mit einem Grünlandstriegel.

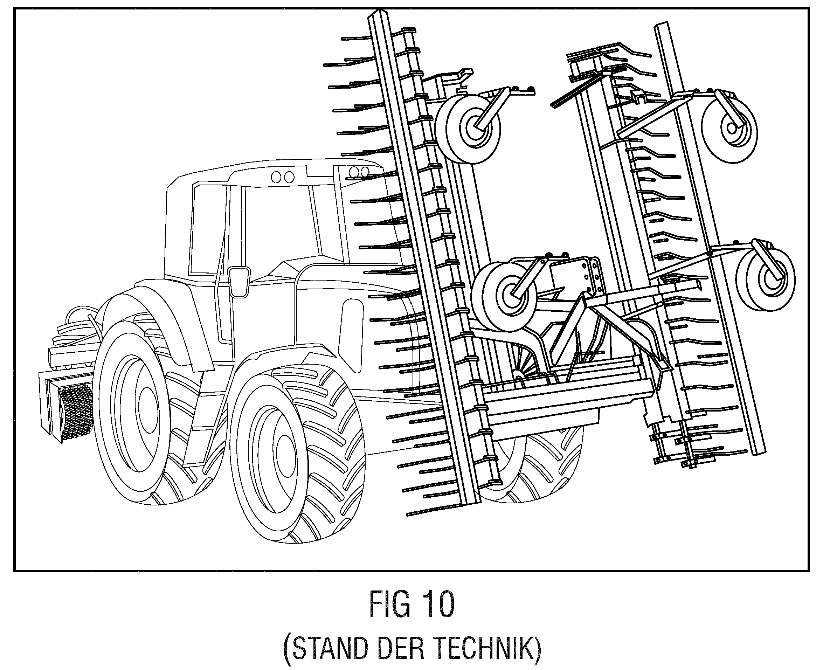

Ein herkömmlicher Grünlandstriegel ist in Fig. 10 dargestellt. Der Grünlandstriegel ist vorne an einem Traktor angebracht. Hinten am Traktor ist eine Walze angebracht. Um den Grünlandstriegel, der vorne an dem Traktor angebracht ist, zu transportieren, besteht der Grünlandstriegel aus zwei Teilen, die, wie in Fig. 10 ersichtlich, hochgeklappt werden können.

Problematisch an dem Grünlandstriegel in Fig. 10 und anderen ähnlich zweiteilig hochklappbaren landwirtschaftlichen Geräten ist, dass der Sichtbereich des Traktorfahrers sehr stark eingeschränkt ist. Der Traktorfahrer sieht lediglich gerade nach vorne einigermaßen unbeeinträchtigt. Darüber hinaus sieht der Fahrer auch direkt seitlich einigermaßen unbeeinträchtigt. Allerdings ragen die beiden Teile des Grünlandstriegels in ihrer Höhe, die jeweils 3 m sein kann, wenn der gesamte Grünlandstriegel 6 m breit ist, deutlich über das Führerhaus hinaus. Dies bedeutet, dass der Fahrer des Traktors ein stark eingeschränktes Sichtfeld hat.

Andererseits existieren Vorschriften bezüglich eines minimalen Sichtfelds, das ein auf einer öffentlichen Straße erlaubtes Fuhrwerk haben darf. Die in Fig. 10 dargestellte Situation entspricht nicht diesen Vorschriften.

Darüber hinaus ist bei der in Fig. 10 dargestellten Konstruktion besonders problematisch, dass gefährliche Maschinenteile, wie beispielsweise die in Fig. 10 gezeigten Zinken, seitlich herausragen. Für andere Verkehrsteilnehmer, wie beispielsweise Fahrradfahrer oder Motorradfahrer oder aber überholende andere Fahrzeuge können diese seitlich vorstehenden Zinken zur Gefahr werden.

Dadurch ergibt sich die Notwendigkeit, mit einem Fuhrwerk, wie es in Fig. 10 gezeigt ist, lediglich nicht-öffentliche Straßen oder Wege zu befahren oder, wenn öffentliche Straßen oder Wege befahren werden sollen, dies mit einem Begleitfahrzeug zu tun, das die notwendigen Signalisierungen, wie beispielsweise gelbe Blinkleuchten etc. hat. Diese Art des Transports des landwirtschaftlichen Geräts von einem Punkt zu einem anderen über eine öffentliche Straße mit Begleitfahrzeug ist jedoch sehr aufwendig und damit auch teuer, insbesondere wenn sämtliche anderen Bodenbearbeitungsmaschinen möglichst dahin gehend ausgerichtet sind, dass sie von einer einzigen Person, nämlich dem Traktorfahrer allein bedient werden können.

Alternativ kann auch ein Einweiser nötig sein, der an Kreuzungen, Einfahrten etc. dem Fahrer des Fuhrwerks und ggf. auch den anderen Verkehrsteilnehmern Hinweiss gibt, damit ein sichereres Umgehen mit dem Fuhrwerk möglich ist. Dies ist jedoch aufgrund des nötigen zusätzlichen Einweisers aufwändig, kompliziert und teuer.

Darüber hinaus existiert die Sicherheitsproblematik auch mit Begleitfahrzeug nach wie vor, obgleich sie dezimiert ist. Die seitlich vorstehenden Maschinenteile, wie beispielsweise die gefährlichen Zinken, sind nach wie vor vorhanden, erregen jedoch aufgrund des typischerweise mit gelben Blinklichtern versehenen Begleitfahrzeugs größere Aufmerksamkeit, so dass sich andere Verkehrsteilnehmer besser vorsehen können.

Das US-Patent Nr. 4,646,851 offenbart einen horizontalen zweifach faltbaren Werkzeugbalken, der zwei äußere Abschnitte hat, die an jedem Ende eines mittleren Hauptabschnitts drehbar befestigt sind, so dass die zwei äußeren Abschnitte in eine Horizontalebene gefaltet werden können, um die Breite der Anordnung bezüglich einer voll ausgefahrenen Anordnung zu halbieren.

Die Aufgabe der vorliegenden Erfindung besteht darin, ein effizienteres landwirtschaftliches Gerät zu schaffen.

Diese Aufgabe wird durch ein landwirtschaftliches Gerät nach Patentanspruch 1 oder ein Verfahren zum Herstellen eines landwirtschaftlichen Geräts nach Patentanspruch 16 oder eine Maschinenkombination nach Patentanspruch 14 gelöst.

Die vorliegende Erfindung basiert auf der Erkenntnis, dass das seitliche Hochklappen von landwirtschaftlichen Geräten in zwei Teilen dahin gehend problematisch ist, dass gefährliche Maschinenteile, wie beispielsweise Bodenbearbeitungszinken bei Grünlandstriegeln oder Bodenbearbeitungsmesser bei Aerifizierern seitlich und in die Höhe vorstehen. Ferner ist das eingeschränkte und damit nicht vorschriftsmäßige Sichtfeld eine weitere gravierende Problematik.

Um diese Problematiken auszuräumen, umfasst ein landwirtschaftliches Gerät zur Bodenbearbeitung gemäß der Erfindung eine Mehrzahl von länglichen Trägern, wobei an jedem Träger Bodenbearbeitungswerkzeuge angebracht sind, die in einer Betriebsposition den Boden in Eingriff nehmen. Im Gegensatz zum bekannten Grünlandstriegel ist bei der vorliegenden Erfindung ein Träger bezüglich des anderen Trägers entlang einer Längsrichtung der länglichen Träger verschiebbar, so dass ein Träger in der Stauposition hinter den anderen Träger geschoben werden kann. Alternativ oder zusätzlich ist ein Träger bezüglich des anderen Trägers umklappbar, um im Gegensatz zum bekannten System ein kompakteres und sicheres Staukonzept zu schaffen. Insbesondere ist der Träger, der verschiebbar oder umklappbar ist, in der Betriebsposition so angeordnet, dass die Bodenbearbeitungswerkzeuge des Trägers mit dem Boden Eingriff nehmen. In der Stauposition ist der Träger, der verschiebbar oder umklappbar ist, dagegen so angeordnet, dass der Träger überlappend mit dem anderen Träger ist oder bezüglich des anderen Trägers umgeklappt ist. Vorzugsweise liegt bei der Umklappungsvariante der umgeklappte Träger auf dem anderen, also dem nicht-umgeklappten oder festen Träger auf.

Bei einem bevorzugten Ausführungsbeispiel der vorliegenden Erfindung sind drei längliche Träger vorhanden, wobei ein Träger bezüglich des zweiten Trägers umklappbar ist und ein dritter Träger bezüglich des zweiten Trägers verschiebbar ist, wobei der zweite Träger bei dieser Implementierung fest ist und mit dem Schlepper verbindbar ist. Der erste Träger wird also ausgeklappt und der zweite Träger wird seitlich herausgeschoben. Damit ergibt sich ein außerordentlich kompaktes landwirtschaftliches Gerät, das selbst bei Bodenbearbeitungsbreiten von 6 m oder mehr ohne Weiteres die Maximal-Transportbreite von 2,4 m einhalten kann.

Bei einer Implementierung ist das landwirtschaftliche Gerät für einen Frontanbau an einem Traktor geeignet, wobei das landwirtschaftliche Gerät als Grünland- oder Ackerstriegel ausgebildet ist. In diesem Fall genügt die Schubkraft, im Gegensatz zur Zugkraft wenn das landwirtschaftliche Gerät hinten am Traktor angebaut ist, um den geeigneten Zweck zu erfüllen.

Ein solcher Grünland- oder Ackerstriegel kann auch zur Pflege bzw. Bearbeitung von Kommunalplätzen oder Sportplätzen, wie beispielsweise Golfplätzen eingesetzt werden und muss nicht unbedingt nur für die Bearbeitung von landwirtschaftlichen Böden, wie beispielsweise Ackern oder Grünland eingesetzt werden. Bei einer Implementierung wird bei einer Arbeitsbreite von 6 m eine Transportbreite von 2,4 m und eine Höhe von 1,5 m in der Stauposition des landwirtschaftlichen Geräts erreicht. Insbesondere bevorzugt wird hier der dreiteilige Aufbau, wobei ein länglicher Träger bezüglich eines festen länglichen Trägers umgeklappt wird und der andere längliche Träger bezüglich des festen Trägers ausgefahren wird, wobei der feste Träger an der Front eines Traktors anbringbar ist.

Das erfindungsgemäße landwirtschaftliche Gerät zeichnet sich besonders dadurch aus, dass es zu keiner Sichteinschränkung führt, dass also ein Sichtfeld von 180° wenigstens bereitgestellt wird. Darüber hinaus existieren keine gefährlichen Seitenteile, wie beispielsweise seitlich hervorstehende Zinken oder Messer. Die meisten Zinken stehen lediglich nach unten vor, wo sie ungefährlich sind, oder Zinken stehe nach oben vor, jedoch nur innerhalb der Transportbreite, also nur in der "Flucht" des Traktors.

Die dreiteilige Ausfertigung des landwirtschaftlichen Geräts hat weitere Vorteile, die insbesondere darin liegen, dass jedes Element mit einem Tastrad versehen ist, so dass eine gute Bodenanpassung erreicht wird, die insbesondere deutlich erhöht im Vergleich zu einer lediglich zweiteiligen Ausführung ist. Darüber hinaus wird es bevorzugt, eine durch Spindeln erreichte Höheneinstellung und Geräteeinstellung des landwirtschaftlichen Geräts zu erreichen, um die Art und Weise, wie die Bodenbearbeitungswerkzeuge, wie beispielsweise Zinken oder Messer mit dem Boden Eingriff nehmen, einstellen zu können.

Darüber hinaus wird es bevorzugt, insbesondere bei der Implementierung eines Grünlandstriegels eine erhöhte Maulwurfschiene für eine bessere Verteilung von Maulwurfhäufen vorzusehen, die, damit der Betreiber des landwirtschaftlichen Geräts optimal für seine Bedürfnisse arbeiten kann, mit Spindeln einstellbar ist.

Die Arbeitsbreite kann von 6 m auch auf 7,8 m ohne Weiteres erhöht werden, wobei dennoch eine Transportbreite von 3 m nicht überschritten wird.

Bei einer weiteren Implementierung der vorliegenden Erfindung werden ferner nicht nur erhöhte Maulwurfschienen vorgesehen, sondern auch vorzugsweise damit zusammen passende Räumleisten an den Tasträdern. Damit wird sichergestellt, dass dann, wenn ein Tastrad über einen Maulwurfhaufen fährt, nicht gleich der gesamte Grünlandstriegel, also die mit den Trägern verbundenen Bodenbearbeitungswerkzeuge angehoben werden, sondern dass die lockere Maulwurfhaufenerde durch die Räumleiste aus dem Weg geräumt wird, das Tastrad also auf annähernd gleicher Höhe bleibt und damit in der Nähe eines Maulwurfhaufens die Wirkung der Bodenbearbeitungswerkzeuge nach wie vor vorhanden ist und nicht neutralisiert wird.

Die bevorzugte Implementierung des landwirtschaftlichen Geräts ermöglicht es ferner, eine optimale Grünlandbearbeitungs- oder Ackerbearbeitungsmaschinenkombination zu erreichen. Insbesondere ist vorne an einem Traktor, also im Frontanbau das landwirtschaftliche Gerät angebracht. Vorzugsweise ist das landwirtschaftliche Gerät bei der Maschinenkombination ein Grünlandstriegel. Am Heck des Traktors ist in dieser Reihenfolge zunächst ein Aerifizierer bzw. Vertikutierer angebracht und daran anschließend eine Bodenwalze. Sowohl über den Aerifizierer als auch über die Walze oder nur an einem der beiden Geräte kann Saatgut, wie beispielsweise Grassamen, zugeführt werden, so dass in einem Zug Grünland oder Acker bearbeitet und angesät und gleichzeitig auch gewalzt werden kann.

Bevorzugte Ausführungsbeispiele der vorliegenden Erfindung werden nachfolgend Bezug nehmend auf die beiliegenden Zeichnungen detailliert erläutert. Es zeigen:
- Fig. 1a: ein dreiteiliges landwirtschaftliches Gerät mit einem umklappbaren und einem verschiebbaren Träger,
- Fig. 1b: das dreiteilige Gerät von Fig. 1 a in Stauposition;
- Fig. 1c: eine Seitenansicht des dreiteiligen Geräts in Stauposition, wobei der verschiebbare Träger zwischen Traktor-Anschluss und festem Träger verschiebbar ist;
- Fig. 2: eine Vorderansicht eines landwirtschaftlichen Geräts mit Tasträdern und einer Mechanik zum Umklappen;
- Fig. 3: eine Draufsicht auf ein landwirtschaftliches Gerät zur Darstellung der Mechanik zum Verschieben eines länglichen Trägers, wobei hier der feste Träger zwischen dem Traktor-Anschluss und dem verschiebbaren Träger angeordnet ist;
- Fig. 4: eine Ansicht des landwirtschaftlichen Geräts in einer teil-ausgefahrenen Situation;
- Fig.5: eine Detailansicht eines komplett ausgefahrenen Trägers mit Rolle/Schienen-Konstruktion;
- Fig. 6: eine Ansicht eines teilweise umgeklappten länglichen Trägers;
- Fig. 7: eine Ansicht auf die Scharnier/Hydraulik-Anordnung eines komplett umgeklappten länglichen Trägers;
- Fig. 8: eine Detailansicht der in Fig. 5 dargestellten Schienen/Rollen-Konstruktion zur Darstellung des Spiels;
- Fig.9: eine Detailansicht der vorgespannten Anordnung zum Umklappen des länglichen Trägers mit Spiel zur Bodenanpassung;
- Fig. 10: eine Darstellung eines zweiteiligen Grünlandstriegels gemäß dem Stand der Technik; und
- Fig. 11: eine Maschinenkombination gemäß einem Ausführungsbeispiel der vorliegenden Erfindung.

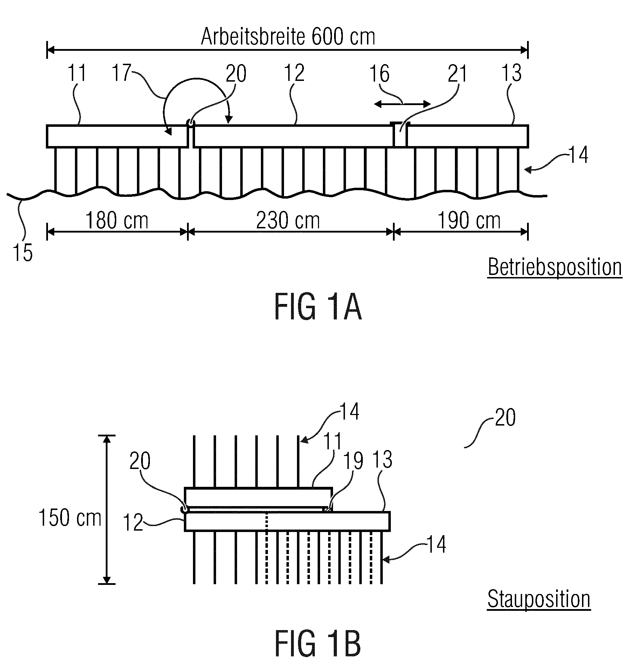

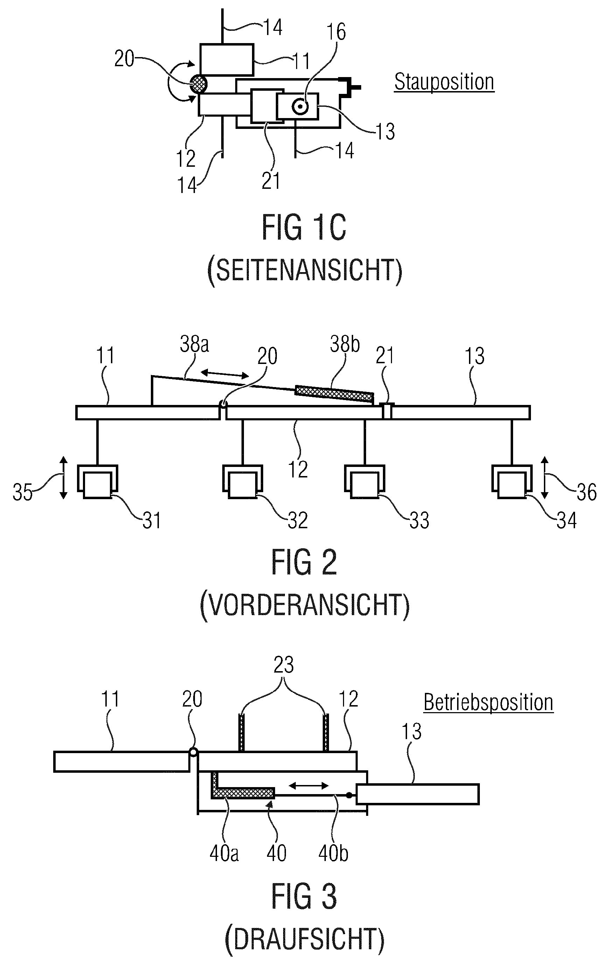

Fig. 1 a zeigt ein landwirtschaftliches Gerät zur Bodenbearbeitung mit einer Mehrzahl von länglichen Trägern 11, 12, 13, wobei an jedem Träger Bodenbearbeitungswerkzeuge, wie beispielsweise Zinken angebracht sind, die in einer Betriebsposition, wie es in Fig. 1 a dargestellt ist, den Boden 15 in Eingriff nehmen.

Der längliche Träger 13 ist bezüglich des Trägers 12 entlang einer Längsrichtung 16 des Trägers, wie sie in Fig. 1 a dargestellt ist, verschiebbar. Alternativ oder zusätzlich ist ein anderer Träger, wie beispielsweise der Träger 11 bezüglich des Trägers 12 umklappbar, wie es durch das entsprechende Klappsymbol 17 in Fig. 1 a dargestellt ist. Der Träger 11 bzw. 13, der verschiebbar oder umklappbar ist, ist in einer Betriebsposition, wie es in Fig. 1 a gezeigt ist, so angeordnet, dass die Bodenbearbeitungswerkzeuge 14 des entsprechenden Trägers mit dem Boden 15 Eingriff nehmen. In einer Stauposition ist der entsprechende Träger dagegen, wie es in Fig. 1 b gezeigt ist, so angeordnet, dass der Träger 13 überlappend mit dem anderen Träger 12 ist, wie es schematisch in Fig. 1 b gezeigt ist, wo der Träger 13 hinter bzw. vor dem Träger 12 angeordnet ist, oder wo der andere Träger, wie beispielsweise der umklappbare Träger 11 bezüglich des festen Trägers 12 eingeklappt ist und vorliegend komplett umgeklappt und aufliegend ist. Bei dem in Fig. 1 b gezeigten Ausführungsbeispiel ist der Träger 11 vollständig umgeklappt und aufliegend auf dem Träger 12 an einem Auflageteil 19. Ferner ist der Träger 11 über ein Scharnier 20, das auch in Fig. 1 a gezeigt ist, verbunden. Dagegen ist der Träger 13, der verschiebbar entlang der Längsrichtung 16 ausgebildet ist, über eine Schienen/Rollen-Konstruktion, die schematisch bei 21 in Fig. 1 a dargestellt ist, mit dem festen Träger 12 verbunden. Aus

Fig. 1 b ist ersichtlich, dass in der Stauposition keine Bodenbearbeitungswerkzeuge, wie beispielsweise Zinken oder Messer seitlich vorstehen. Darüber hinaus sei darauf hingewiesen, dass die Höhe des gesamten landwirtschaftlichen Geräts bei diesem Ausführungsbeispiel, wie es in Fig. 1 b schematisch dargestellt ist, typischerweise 1,50 m oder aber niedriger als 2 m und vorzugsweise niedriger als 1,80 m ist. Damit existiert für einen Traktorfahrer keine Sichtbereichseinschränkung und alle damit verbundenen Probleme mit Gefahr, Aufwand für Begleitfahrzeug und Bedienung durch eine einzige Person sind erfindungsgemäß gelöst.

So stehen bei dem in Fig. 1 b gezeigten Ausführungsbeispiel zwar Zinken nach oben vor. Die Zinken stehen jedoch nur in der "Flucht" des Traktors nach oben vor, nicht jedoch seitlich. Auf der Seite, auf der Überholvorgänge stattfinden bzw. auf der ein Traktor z.B. Fußgänger passiert, existiert bei dem in Fig. 1 b gezeigten Ausführungsbeispiel keinerlei gefährliches Bodenbearbeitungswerkzeug.

Fig. 1 c zeigt eine Seitenansicht der Stauposition des landwirtschaftlichen Geräts. Insbesondere ist eine Schlepperhalterung 23 schematisch dargestellt. Darüber hinaus ist ersichtlich, dass bei dem in Fig. 1c gezeigten Ausführungsbeispiel sich der verschiebbare Träger 13, wie es durch die schematische Richtungsangabe 16 dargestellt ist, zwischen Schlepper und dem festen Träger 12 befindet. Alternativ kann auch eine andere Reihenfolge genommen werden, wie es in Fig. 3 gezeigt ist, in der der feste Träger 12 zwischen dem verschiebbaren Träger 13 und der Maschinenhalterung 23, die wiederum schematisch in Fig. 3 dargestellt ist, angeordnet ist. Je nach Implementierung kann eine spezielle Schienen/Rollen-Konstruktion, die in Fig. 1c ebenfalls schematisch bei 21 dargestellt ist, verwendet werden, um den verschiebbaren länglichen Träger 13 bezüglich des festen Trägers 12 zu verschieben. Zum Umklappen des klappbaren Trägers 11 bezüglich des festen Trägers 12 ist das Scharnier 20 vorgesehen.

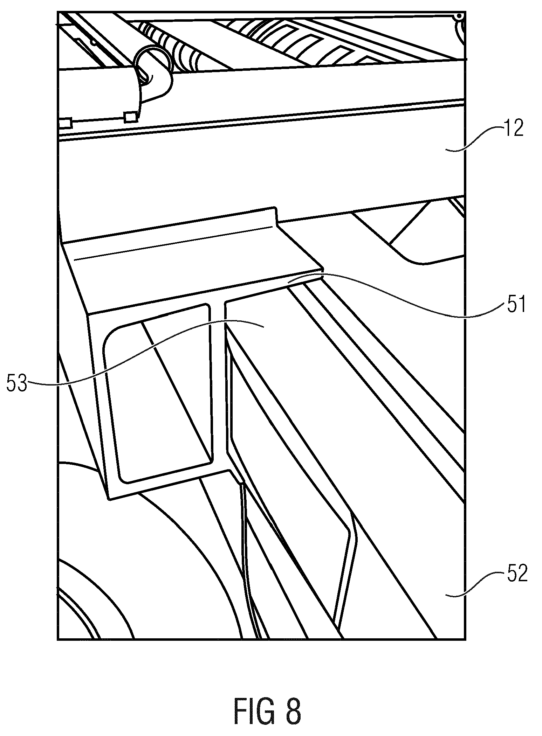

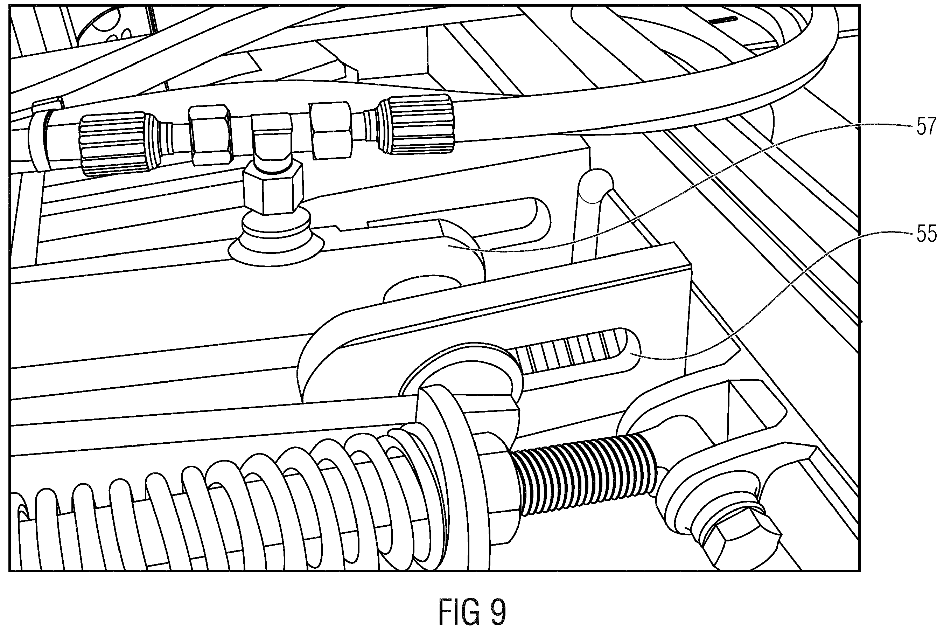

Fig. 2 zeigt eine Darstellung eines landwirtschaftliches Geräts, das zusätzlich zu den Trägern mit Bodenbearbeitungswerkzeugen, wie es bevorzugt wird, Tasträder 31, 32, 33, 34 aufweist. Die Tasträder sind mit den Trägern über feste Verbindungen verbunden, wie es dargestellt ist und "tasten" daher den Boden, wie beispielsweise das Grünland oder den Acker ab, so dass der entsprechende Träger, der mit dem Tastrad verbunden ist, in etwa der Bodentopologie folgt. Insbesondere vorteilhaft ist ferner die noch dargestellte Implementierung des Scharniers bzw. der Halterung des Klappmechanismus, um ein Spiel 35 zu haben. Eine entsprechende Langloch-Ausbildung mit Vorspannung ist in Fig. 9 dargestellt. Darüber hinaus ist der Rollen/Schienen-Mechanismus 21 ebenfalls mit einem ausreichenden Spiel ausgebildet, so dass sich das Tastrad 34 nach unten bzw. oben bezüglich des Tastrads 33 und der anderen Tasträder bewegen kann, wie es bei 36 dargestellt ist. Eine entsprechende mechanische Implementierung dieser Schienen/Rollenkonstruktion ist in Fig. 8 als bevorzugtes Ausführungsbeispiel dargestellt.

Damit wird bei dem in Fig. 2 gezeigten Ausführungsbeispiel je ein Tastrad 31, 34 mit den entsprechenden beweglichen Träger 11, 13 verbunden, während der feste Träger 12 mit zwei Tasträdern 32, 33 versehen ist. Alternativ könnte jedoch ein einziges Tastrad mit dem festen Träger 12 verbunden sein, das dann vorzugsweise in der Mitte angeordnet ist.

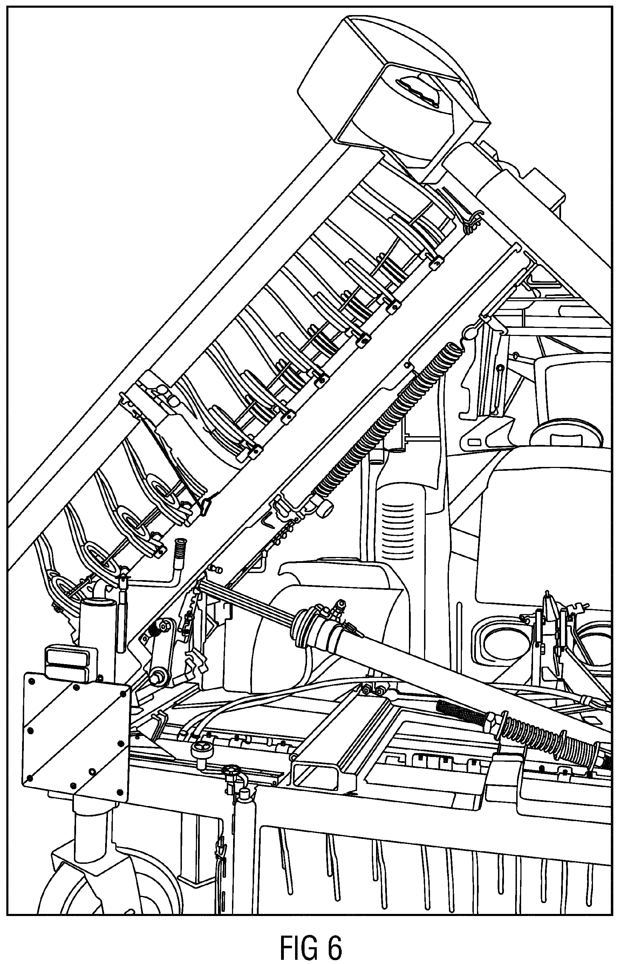

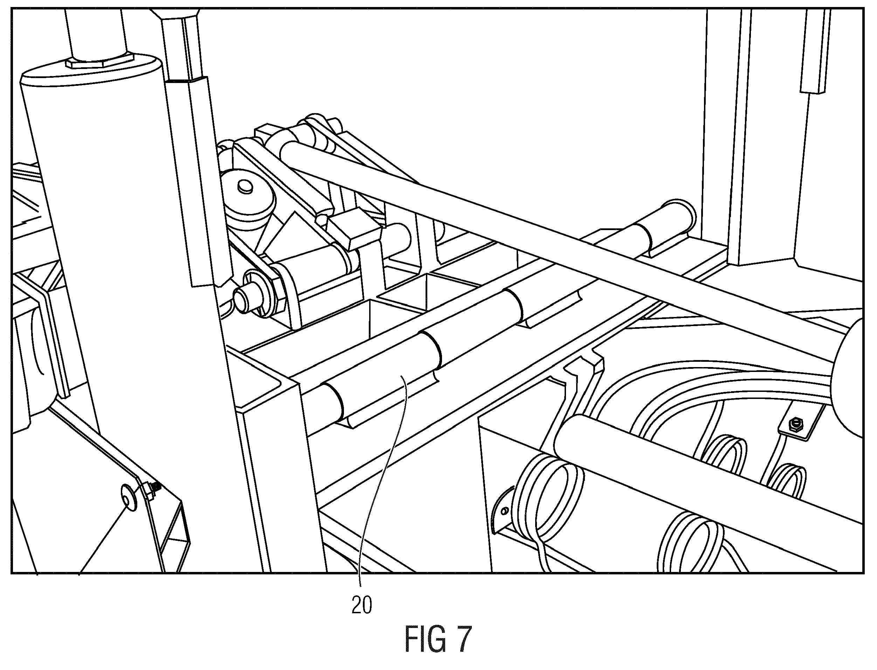

Fig. 2 zeigt ferner eine Leistungs-betriebene Betätigungseinrichtung in Form eines Hydraulikelements 38, das einen Kolben 38a und eine Buchse 38b aufweist. Durch Ausfahren des Kolbens 38a aus der Buchse 38b wird der umklappbare Träger 11 abgesenkt, während durch Einfahren des Kolbens 38a in die Buchse 38b der klappbare Träger 11 von seiner Betriebsposition in die Stauposition geklappt wird. Eine konkrete bevorzugte mechanische Implementierung ist in Fig. 6 und Fig. 7 dargestellt.

Die Betätigung der Leistungs-betriebenen Betätigungseinrichtung erfolgt vorzugsweise hydraulisch. Alternativ kann die Betätigung jedoch elektrisch oder mechanisch, wie beispielsweise mittels einer Zapfwelle an dem Traktor erfolgen.

Fig. 3 zeigt eine wieder vorzugsweise hydraulische Betätigungsvorrichtung zum Aus- und Einfahren des verschiebbaren Trägers 13 bezüglich des festen Trägers 12. Hierzu ist ähnlich zur Implementierung in Fig. 2 wieder eine Hydraulikvorrichtung 40 vorgesehen, die eine Buchse 40a und einen Kolben 40b aufweist. Durch Ausfahren des Kolbens 40b aus der Buchse 40a wird der verschiebbare Träger 13 von seiner Stauposition in die Betriebsposition gebracht. Durch Einfahren des Kolbens 40b in die Buchse 40a wird der verschiebbare Träger 13 von der Betriebsposition in die Stauposition gebracht.

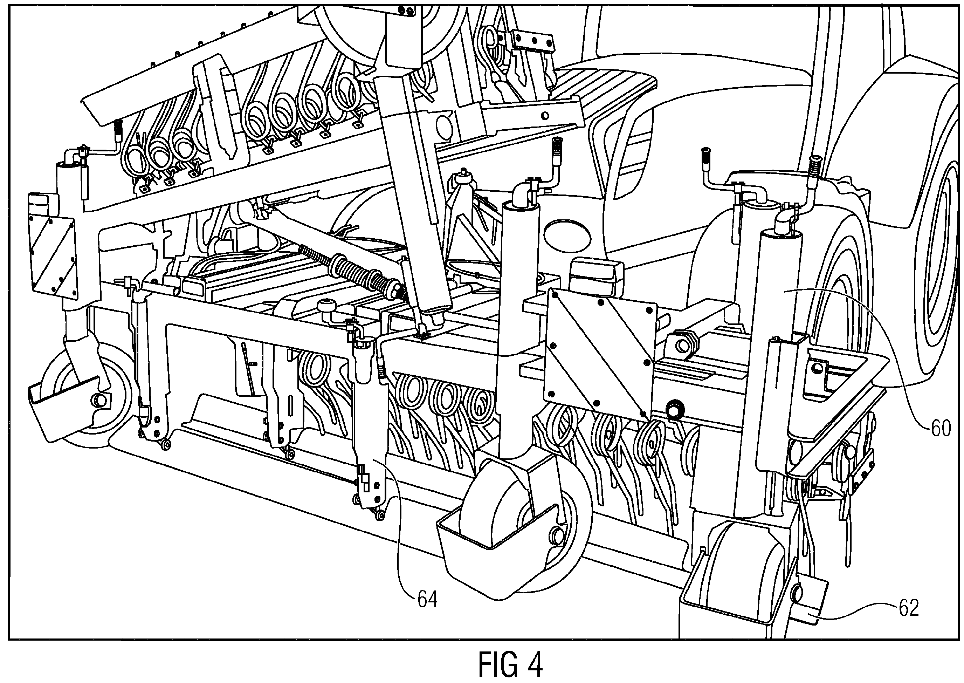

Fig. 4 zeigt eine detaillierte Darstellung des landwirtschaftlichen Geräts in Form eines Striegels für Grünland zum Zeitpunkt, bei dem die Stauposition gerade verlassen wird. Insbesondere ist der klappbare Träger leicht hochgeklappt dargestellt und ist der verschiebbare Träger leicht ausgefahren dargestellt.

Ferner ist das landwirtschaftliche Gerät in Form des Grünlandstriegels mit entsprechenden Zinken als Bodenbearbeitungswerkzeuge versehen, und das gesamte Gerät ist als Frontanbau ausgeführt, d. h. ist an der Front eines Traktors angebracht. Ferner sind Tasträder zu sehen, wie sie anhand von Fig. 2 dargestellt worden sind, wobei jedes Tastrad mit einer Abweisschiene bzw. einer Räumschiene versehen ist, deren Unterkante eine definierte Höhe über dem Boden angeordnet ist, und die in Fahrtrichtung vor der jeweiligen Tastrolle bzw. dem jeweiligen Tastrad angeordnet ist. Die definierte Höhe liegt zwischen 3 cm und 30 cm über dem Boden.

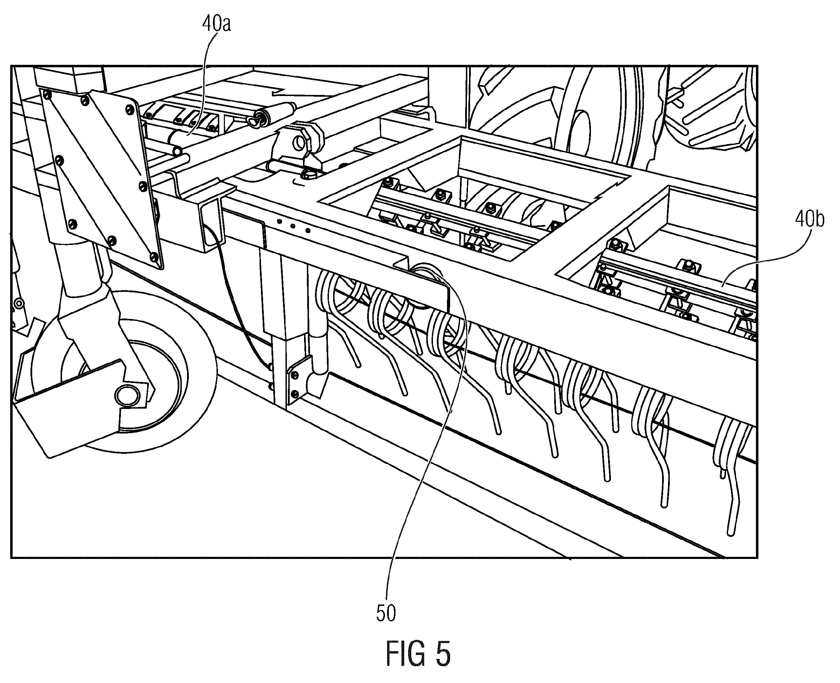

Fig. 5 zeigt eine Detail-Draufsicht der Schienen/Rollen-Konstruktion und der Hydraulikvorrichtung in Form des ausgefahrenen Kolbens 40b und 40a. Die Schienenkonstruktion 21 wird anhand von Fig. 8 detaillierter dargestellt, wobei jedoch eine Rolle dieser Schienenkonstruktion bereits bei 50 dargestellt ist. Fig. 8 zeigt die Schienen/Rollen-Konstruktion detaillierter, wobei eine Schienenkonstruktion einen festen Anteil 51 und den verschiebbaren Anteil 52 hat. Ferner wird die Schiene bzw. der verschiebbare Anteil 52 nicht fest geführt, sondern über einen definierten Spielraum, der bei 53 dargestellt ist. Damit ist es möglich, dass sich der verschiebbare Träger 13, gesteuert durch das Tastrad und damit in detaillierter Anpassung an den Boden bezüglich des festen Trägers 12 auf- und abbewegen kann, wie es bei 36 in Fig. 2 dargestellt ist.

Fig. 6 zeigt eine Darstellung des Kolben-Buchsen-Mechanismus 38, die in Fig. 2 schematisch dargestellt worden ist, in einer etwas weiter ausgefahrenen Position als in Fig. 4, wobei der klappbare Träger 11 um ein Scharnier herum weiter umgeklappt ist. Bei immer weiterer Ausfahrung des Kolbens aus der Buchse steht zu einer bestimmten Position der klappbare Träger 11 senkrecht und überschreitet einen Totpunkt, nämlich den senkrechten Punkt. Bei Überschreiten des Totpunkts unterstützt die Schwerkraft die Klappbewegung, was zu einer Ruckbewegung führt. Vorzugsweise ist eine Dämpfung dieser Ruckbewegung vorgesehen, um auch bei häufiger Betätigung eine dadurch möglicherweise hervorgerufene Beschädigung aufgrund des Ruckens zu vermeiden.

Fig. 7 zeigt dagegen den Kolben in nahezu komplett ausgefahrener Position, wobei der klappbare Träger in Betriebsposition ist.

Fig. 9 zeigt die Lagerung der Buchse 38b nicht in einem einfachen Loch ohne Spiel, sondern in einem Langloch 55, wobei die Lagerung vorgespannt ist, und zwar durch eine Feder 56, so dass dann, wenn ein ebener Boden vorhanden ist, die Lagerung des Kolbens 57 des Kolbenmechanismus 38 bei Fig. 9 nach vorne bzw. links vorgespannt ist. Führt dagegen, wie es bei 35 in Fig. 2 dargestellt ist, eine Bodenunebenheit dazu, dass das Tastrad 31 nach oben ausgelenkt wird, so kann die Buchsenlagerung 57 innerhalb des Langlochs 55 in Fig. 9 von links nach rechts bzw. von vorne nach hinten sich bewegen und damit eine Spielmöglichkeit schaffen. Damit wird erreicht, dass eine optimale Bodenanpassung durch die Spielmöglichkeiten 35, 36 erreicht wird, und dass dennoch aufgrund der speziellen Implementierung eine stabile und, wenn gewünscht, auch relativ aggressive Bodenbearbeitung durch die Zinken bzw. durch die angebrachten Bodenbearbeitungswerkzeuge 14 erreicht werden kann.

Bei bevorzugten Ausführungsbeispielen der vorliegenden Erfindung wird der feste Träger, also der Träger, der mit der Ankopplung 23 an dem Traktor versehen ist, nicht aus seiner Position bewegt. Stattdessen wird der verschiebbare Träger und/oder der umklappbare Träger lediglich bezüglich dieses festen Trägers bewegt, während der feste Träger stationär bleibt.

Darüber hinaus kann bei Ausführungsbeispielen ein landwirtschaftliches Gerät lediglich aus zwei länglichen Trägern ausgebildet sein, wobei dann ein länglicher Träger bezüglich des anderen länglichen Trägers ausgeklappt bzw. eingeklappt wird, um in der Betriebsposition oder Stauposition zu sein. Alternativ kann auch anstatt des ausklappbaren Trägers ein verschiebbarer Träger vorgesehen sein, so dass bezüglich der Betriebsposition der verschiebbare Träger eingefahren wird, um in der Stauposition überlappend angeordnet zu sein. Dies führt jedoch dazu, dass das landwirtschaftliche Gerät asymmetrisch bezüglich des Traktors angeordnet ist. Wird daher ein zweiteiliges Gerät verwendet, so führt dies dazu, dass lediglich auf der rechten Seite des Traktors wenn, beispielsweise Fig. 4 betrachtet wird und nur ein umklappbarer Träger vorhanden ist, ausladend ist. Wenn dagegen bezüglich Fig. 4 nur ein verschiebbarer Träger vorhanden ist, so ist das landwirtschaftliche Gerät auf der linken Seite ausladend, wenn das Gerät in Betriebsposition ist. Dies kann je nach Implementierung vernünftig und nützlich sein. Für eine komplett symmetrische Implementierung wird es jedoch bevorzugt, das in den Figuren dargestellte dreiteilige landwirtschaftliche Gerät einzusetzen.

Gemäß alternativen Ausführungsbeispielen der vorliegenden Erfindung können auch landwirtschaftliche Geräte mit einer größeren Anzahl von Teilen eingesetzt werden, wie beispielsweise vier oder fünf Teilen. Bei einem vierteiligen Gerät könnte beispielsweise eine Implementierung so sein, dass zwei verschiebbare Träger vorhanden sind oder dass zwei umklappbare Träger vorhanden sind, während ein fünfteiliges Gerät wieder symmetrisch wäre mit zwei umklappbaren Teilen und zwei verschiebbaren Teilen und einem festen Mittelträger.

Wie es dargestellt worden ist, sind die Bodenbearbeitungswerkzeuge Zinken oder Aerifizierungsmesser bzw. Vertikutiermesser, wobei das landwirtschaftliche Gerät dann zur Bearbeitung von Grünland oder Ackerland ausgebildet ist. Eine maximale Höhe des landwirtschaftlichen Geräts in der Stauposition von einem Boden aus, auf dem das landwirtschaftliche Gerät steht, sollte kleiner als 2,5 m und kleiner als 2 m sein. Bei dem in Fig. 1 a und 1 b gezeigten Ausführungsbeispiel ist die Stauposition lediglich 150 cm.

Vorzugsweise ist der zweite Träger, also der mittlere feste Träger 12 bei der dreiteiligen Implementierung gemäß Fig. 2 so ausgebildet, dass er eine Breite zwischen 2 m und 3 m hat, wobei der erste und der dritte Träger kürzer als der zweite Träger sind und eine Breite zwischen 1,5 und 2,5 m aufweisen. Dann ist eine gut verarbeitbare, kompakte und gut staubare Implementierung erreicht. Darüber hinaus ist vorzugsweise jedes Tastrad mit einer Spindel 60, wie es in Fig. 4 dargestellt ist, versehen, um die Höhe der Bodenbearbeitungswerkzeuge bezüglich des Bodens durch diese Spindel 60 einzustellen. Entsprechende Spindeln 60 sind, wie dargestellt, für jedes Tastrad vorgesehen, wie es auch anhand von Fig. 4 ersichtlich ist. Auch die "Maulwurfhaufenschiene", die mit 62 bezeichnet ist, ist einstellbar, und zwar über entsprechende Einstellelemente 64.

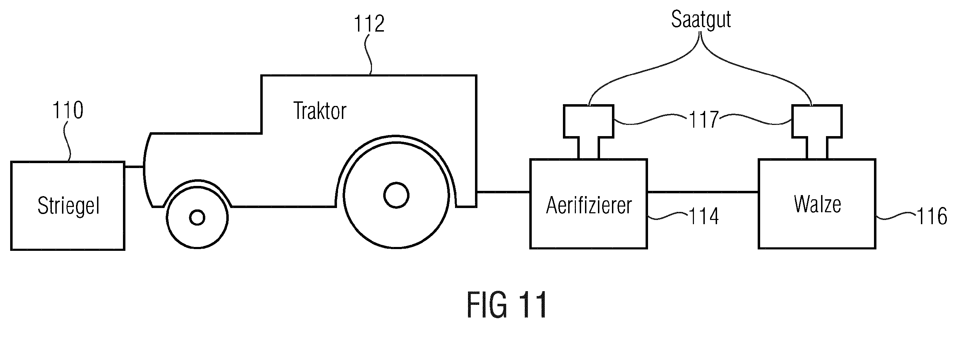

Fig. 11 zeigt eine bevorzugte Maschinenkombination mit einem landwirtschaftlichen Gerät, wie es anhand der Fig. 1-9 dargestellt worden ist, und das lediglich beispielhaft in Fig. 11 mit Striegel 110 bezeichnet ist. Das landwirtschaftliche Gerät 110 ist an der Front eines Traktors 112 angebracht. Direkt hinter dem Traktor 112 ist ein Aerifizierer bzw. Vertikutierer 114 angeordnet, dem schließlich eine Bodenbearbeitungswalze 116 folgt. Diese Maschinenkombination liefert eine optimale und hocheffiziente Bodenbearbeitung. Der Striegel 110 kann mit relativ leichtem Schub angeschoben werden und kann daher an der Front des Traktors 112 angebracht werden. Er dient dazu, unerwünschte Gräser auszureißen und die Grasnarbe insofern auch zu lockern. Dann folgt der Aerifizierer 114, der Schlitze zur Bodenbelüftung und zur Saatguteinbringung in den Boden "schneidet". Gleichzeitig wird durch die Saatgutzuführung, die an dem Aerifizierer 114 oder an der Walze 116 angebracht ist und mit 117 bezeichnet ist, Saatgut zugeführt. Dieses Saatgut kann aufgrund der Wirkung des Striegels 110 und des Aerifizierers 114 bereits gut den Boden erreichen. Dann, damit es besser anwächst und keine Verluste irgendwelcher Art, beispielsweise durch Windabtrag auftritt, wird das auf den Boden aufgelegte Saatgut durch die nachfolgende Walze 116 angedrückt. Damit wird eine komplette Grüngutpflege in einem Zug durch die speziell in Fig. 11 dargestellte Maschinenkombination erreicht.

Darüber hinaus ist es aufgrund der kompakten und sicheren Bauweise des landwirtschaftlichen Geräts gemäß der vorliegenden Erfindung möglich und sinnvoll, bereits mit dieser Maschinenkombination aus dem Stützpunkt auszurücken und über öffentliche Wege/Straßen zu einem zu bearbeitenden Platz zu führen. An Ort und Stelle kann dann ohne Weiteres der Striegel ausgeklappt bzw. ausgefahren werden. Darüber hinaus kann auch die Walze einerseits und kann auch der Aerifizierer andererseits ausgeklappt werden. Da diese beiden Werkzeuge hinter dem Traktor angebracht sind, kann dadurch eine Sichtbeeinträchtigung vermieden werden, selbst wenn der Aerifizierer nicht erfindungsgemäß, sondern beispielsweise wie in Fig. 10 dargestellt ausgebildet ist.

Vorzugsweise ist die Walze ebenfalls gewissermaßen "durchgeschleift" an einem Heck des Schleppers angebracht. Alternativ kann die Walze 116 jedoch auch an dem Aerifizierer bzw. Belüfter angebracht sein, solange sie sich in Fahrtrichtung des Schleppers hinter dem Belüfter erstreckt.

## Patentansprüche

1. Landwirtschaftliches Gerät zur Bodenbearbeitung, mit folgenden Merkmalen:
einer Mehrzahl von länglichen Trägern (11, 12, 13), wobei an jedem Träger Bodenbearbeitungswerkzeuge (14) angebracht sind, die in einer Betriebsposition den Boden (15) in Eingriff nehmen, wobei die Mehrzahl von länglichen Trägern (11, 12, 13) einen ersten Träger (11), einen zweiten Träger (12), und einen dritten Träger (13) aufweist,
wobei der dritte Träger (13) bezüglich des zweiten Trägers (12) entlang einer Längsrichtung der länglichen Träger (11, 12,13) verschiebbar ist, und wobei der erste Träger (11) bezüglich des zweiten Trägers (12) umklappbar ist, und
wobei der erste Träger (11) und der dritte Träger (13) in der Betriebsposition so angeordnet sind, dass die Bodenbearbeitungswerkzeuge (15) des ersten Trägers (11) und des dritten Trägers (13) mit dem Boden Eingriff nehmen,
wobei der erste Träger (11) und der dritte Träger (13) in einer Stauposition so angeordnet sind, dass der dritte Träger (13) überlappend mit dem zweiten Träger (12) ist und der erste Träger (11) bezüglich des zweiten Trägers (12) eingeklappt ist und auf dem zweiten Träger (12) aufliegt, und
wobei der zweite Träger (12) mit einem Schlepper (112) verbindbar ist.

2. Landwirtschaftliches Gerät nach Anspruch 1,
bei dem der erste Träger (11) über ein Scharnier (20) mit dem zweiten Träger (12) verbunden ist, oder
bei dem der dritte Träger (13) über eine Schienen-Rollen-Konstruktion (21) mit dem zweiten Träger (12) verbunden ist, wobei die Schienen-Rollen-Konstruktion so ausgebildet ist, dass dieselbe ein Spiel aufweist, dass sich der erste Träger (11) in der Arbeitsposition um mindestens 20 cm an seinem äußeren Ende bezüglich des zweiten Trägers (12) auf- und ab-bewegen kann.

3. Landwirtschaftliches Gerät nach einem der vorhergehenden Ansprüche,
bei dem der zweite Träger (12) so an dem Schlepper (112) anbringbar ist, dass der zweite Träger (12) bezüglich des ersten Trägers (11) nicht bewegt wird, wenn der erste Träger (11) von der Stauposition in die Arbeitsposition gebracht wird.

4. Landwirtschaftliches Gerät nach einem der vorhergehenden Ansprüche,
bei dem die Bodenbearbeitungswerkzeuge (14) Zinken oder Aerifizierungsmesser sind, und bei dem das landwirtschaftliche Gerät zur Bearbeitung von Grünland oder Ackerland ausgebildet ist.

5. Landwirtschaftliches Gerät nach einem der vorhergehenden Ansprüche,
bei dem eine maximale Höhe des landwirtschaftlichen Geräts in der Stauposition von einem Untergrund aus, auf dem das landwirtschaftliche Gerät steht, kleiner als 2,50 m ist.

6. Landwirtschaftliches Gerät nach einem der vorhergehenden Ansprüche,
bei dem der zweite Träger (12) wenigstens ein Tastrad (32, 33) aufweist und der erste Träger (11) oder der dritte Träger (13) jeweils genau ein Tastrad (34, 35) aufweist, wobei die Tasträder so ausgebildet sind, dass sie in der Betriebsposition auf dem Boden (15) rollen.

7. Landwirtschaftliches Gerät nach Anspruch 6,
bei dem jedes Tastrad mit einer Abweisschiene versehen ist, deren Unterkante eine definierte Höhe über dem Boden angeordnet ist und die in Fahrtrichtung vor dem jeweiligen Tastrad angeordnet ist.

8. Landwirtschaftliches Gerät nach einem der vorhergehenden Ansprüche, das ferner folgende Merkmale aufweist:
eine Leistungs-betreibbare Betätigungseinrichtung zum Betätigen des ersten Trägers (11) oder des dritten Trägers (13), um den dritten Träger (13) zu verschieben oder den ersten Träger (11) umzuklappen, wobei die Betätigungseinrichtung durch elektrische Kraft, mechanische Kraft oder hydraulisch betreibbar ist.

9. Landwirtschaftliches Gerät nach Anspruch 8,
bei dem die Betätigungseinrichtung hydraulisch ist und einen ersten Kolbenantrieb (40) zum Verschieben des dritten Trägers (13) bezüglich des zweiten Trägers (12) und einen zweiten Kolbenantrieb (38) zum Umklappen des ersten Trägers (11) bezüglich des zweiten Trägers (12) aufweist.

10. Landwirtschaftliches Gerät nach Anspruch 9,
bei dem die Betätigungseinrichtung eine Totpunktdämpfung aufweist, um eine Kippbewegung des ersten Trägers (11), wenn derselbe bei dem Umklappen über den Totpunkt bewegt wird, zu dämpfen.

11. Landwirtschaftliches Gerät nach Anspruch 1,
bei dem der zweite Träger (12) eine Breite zwischen 2 und 3 m hat, und bei dem der erste Träger (11) und der dritte Träger (13) kürzer als der zweite Träger (12) sind und eine Breite zwischen 1,5 und 2,5 m aufweisen.

12. Landwirtschaftliches Gerät nach Anspruch 9,
bei dem der zweite Kolbenantrieb (38) einen Kolben (38a) und eine Buchse (38b) aufweist, wobei der Kolben oder die Buchse an dem ersten Träger (11) durch eine erste Befestigungseinrichtung befestigt ist, und wobei das andere Element aus dem Kolben und der Buchse an dem zweiten Träger (12) durch eine zweite Befestigungseinrichtung befestigt ist,
wobei die erste oder zweite Befestigungseinrichtung (55, 57) so ausgebildet ist, dass der erste Träger (11) in der Betriebsposition bezüglich des zweiten Trägers (12) gegen eine Vorspannung (56) bewegbar ist.

13. Landwirtschaftliches Gerät nach Anspruch 6,
bei dem die Höhe der Bodenbearbeitungswerkzeuge durch Spindeln (60) einstellbar ist, wobei jedes Tastrad mit einer Spindeleinstellung (60) versehen ist.

14. Maschinenkombination mit folgenden Merkmalen:
einem landwirtschaftlichen Gerät (110) zur Bodenbearbeitung, mit folgenden Merkmalen:
einer Mehrzahl von länglichen Trägern (11, 12, 13), wobei an jedem Träger Bodenbearbeitungswerkzeuge (14) angebracht sind, die in einer Betriebsposition den Boden (15) in Eingriff nehmen, wobei die Mehrzahl von länglichen Trägern (11, 12, 13) einen ersten Träger (11), einen zweiten Träger (12), und einen dritten Träger (13) aufweist,
wobei der dritte Träger (13) bezüglich des zweiten Trägers (12) entlang einer Längsrichtung der länglichen Träger (11, 12,13) verschiebbar ist, und wobei der erste Träger (11) bezüglich des zweiten Trägers (12) umklappbar ist, und
wobei der erste Träger (11) und der dritte Träger (13) in der Betriebsposition so angeordnet sind, dass die Bodenbearbeitungswerkzeuge (15) des ersten Trägers (11) und des dritten Trägers (13) mit dem Boden Eingriff nehmen,
wobei der erste Träger (11) und der dritte Träger (13) in einer Stauposition so angeordnet sind, dass der dritte Träger (13) überlappend mit dem zweiten Träger (12) ist und der erste Träger (11) bezüglich des zweiten Trägers (12) eingeklappt ist, und
wobei der zweite Träger (12) mit einem Schlepper (112) verbindbar ist;
dem Schlepper (112), wobei der zweite Träger (12) des landwirtschaftlichen Geräts an einer Front des Schleppers (112) angebracht ist;
einem Belüfter (114), der an einem Heck des Schleppers (112) angebracht ist; und
einer Walze (116), die an dem Heck des Schleppers (112) oder an dem Belüfter (114) angebracht ist und sich in Vorwärts-Fahrtrichtung des Schleppers (112) hinter dem Belüfter (114) erstreckt.

15. Maschinenkombination nach Anspruch 14,
wobei die Walze (116) oder der Belüfter (114) mit einer Saatgutzuführungsvorrichtung (117) versehen ist, um auf dosierte Art und Weise Saatgut auf einen zu bearbeitenden Boden auszubringen.

16. Verfahren zum Herstellen eines landwirtschaftlichen Geräts zur Bodenbearbeitung, mit folgenden Schritten:
Herstellen einer Mehrzahl von länglichen Trägern (11, 12, 13), wobei an jedem Träger Bodenbearbeitungswerkzeuge (14) angebracht sind, die in einer Betriebsposition den Boden (15) in Eingriff nehmen, wobei die Mehrzahl von länglichen Trägern (11, 12, 13) einen ersten Träger (11), einen zweiten Träger (12), und einen dritten Träger (13) aufweist,
wobei der dritte Träger (13) bezüglich des zweiten Trägers (12) entlang einer Längsrichtung der länglichen Träger (11, 12,13) verschiebbar ist, und wobei der erste Träger (11) bezüglich des zweiten Trägers (12) umklappbar ist, und
wobei der erste Träger (11) und der dritte Träger (13) in der Betriebsposition so angeordnet sind, dass die Bodenbearbeitungswerkzeuge (15) des ersten Trägers (11) und des dritten Trägers (13) mit dem Boden Eingriff nehmen, wobei der erste Träger (11) und der dritte Träger (13) in einer Stauposition so angeordnet sind, dass der dritte Träger (13) überlappend mit dem zweiten Träger (12) ist und der erste Träger (11) bezüglich des zweiten Trägers (12) eingeklappt ist und auf dem zweiten Träger (12) aufliegt, und wobei der zweite Träger (12) mit einem Schlepper (112) verbindbar ist.

## Claims

1. Agricultural device for soil cultivation, comprising:
a plurality of elongated supports (11, 12, 13), wherein soil cultivation tools (14) are mounted on each support, which engage the soil (15) in an operating position, wherein the plurality of elongated supports (11, 12, 13) comprise a first support (11), a second support (12) and a third support (13),
wherein the third support (13) is shiftable with respect to the second support (12) along a longitudinal direction of the elongated support (11, 12, 13) and wherein the first support (11) can be folded down with respect to the second support (12), and
wherein the first support (11) and the third support (13) are disposed in the operating position such that the soil cultivation tools (15) of the first support (11) and the third support (13) engage the soil,
wherein the first support (11) and the third support (13) are disposed in a stowage position such that the third support (13) overlaps with the second support (12) and the first support (11) is folded with respect to the second support (12) and rests on the second support (12), and
wherein the second support (12) can be connected to a tractor (112).

2. Agricultural device according to claim 1,
wherein the first support (11) is connected to the second support (12) via a hinge (20), or
wherein the first support (13) is connected to the second support (12) via a rail-roller structure (21), wherein the rail-roller structure is configured such that the same comprises a clearance such that the first support (11) can move up and down at its outer end by at least 20 cm with respect to the second support (12) in the operating position.

3. Agricultural device according to one of the preceding claims,
wherein the second support (12) can be attached to the tractor (112) such that the second support (12) is not moved with respect to the first support (11) when the first support (11) is brought into the operating position from the stowage position.

4. Agricultural device according to one of the preceding claims,
wherein the soil cultivation tools (14) are teeth or aeration knives, and wherein the agricultural device is configured for cultivating grassland or farmland.

5. Agricultural device according to one of the preceding claims,
wherein a maximum height of the agricultural device in the stowage position from a floor on which the agricultural device rests is less than 2.50 m.

6. Agricultural device according to one of the preceding claims,
wherein the second support (12) comprises at least one roller feeler (32, 33) and the first support (11) or the third support (13) comprise exactly one roller feeler (34, 35) each, wherein the roller feelers are configured such that the same roll on the soil (15) in the operating position.

7. Agricultural device according to claim 6,
wherein each roller feeler is provided with a castoff rail whose bottom edge is disposed at a defined height above the soil and which is disposed in front of the respective roller feeler in driving direction.

8. Agricultural device according to one of the preceding claims, further comprising:
a power-operated operating means for operating the first support (11) or the third support (13) in order to shift the third support (13) or to fold down the first support (11), wherein the operating means is operable by electrical power, mechanical power or in a hydraulic manner.

9. Agricultural device according to claim 8,
wherein the operating means is hydraulic and comprises a first piston drive (14) for shifting the third support (13) with respect to the second support (12) and a second piston drive (38) for folding down the first support (11) with respect to the second support (12).

10. Agricultural device according to claim 9,
wherein the operating means comprises dead center dampening in order to dampen a tilting movement of the first support (11) when the same is moved beyond the dead center when folding down.

11. Agricultural device according to claim 1,
wherein the second support (12) has a width between 2 and 3 m and wherein the first support (11) and the third support (13) are shorter than the second support (12) and have a width between 1.5 and 2.5 m.

12. Agricultural device according to claim 9,
wherein the second piston drive (38) comprises a piston (38a) and a sleeve (38b), wherein the piston or the sleeve is mounted on the first support (11) by a first mounting means, and wherein the other element of piston and sleeve is mounted on the second support (12) by a second mounting means,
wherein the first or second mounting means (55, 57) are configured such that the first support (11) is movable with respect to the second support (12) against a bias (56) in the operating position.

13. Agricultural device according to claim 6, wherein the height of the soil cultivation tool is adjustable by spindles (60), wherein each roller feeler is provided with a spindle adjustment (60).

14. Machine combination, comprising:
an agricultural device for soil cultivation, comprising:
a plurality of elongated supports (11, 12, 13), wherein soil cultivation tools (14) are mounted on each support, which engage the soil (15) in an operating position, wherein the plurality of elongated supports (11, 12, 13) comprise a first support (11), a second support (12) and a third support (13),
wherein the third support (13) is shiftable with respect to the second support (12) along a longitudinal direction of the elongated support (11, 12, 13) and wherein the first support (11) can be folded down with respect to the second support (12), and
wherein the first support (11) and the third support (13) are disposed in the operating position such that the soil cultivation tools (15) of the first support (11) and the third support (13) engage the soil,
wherein the first support (11) and the third support (13) are disposed in a stowage position such that the third support (13) overlaps with the second support (12) and the first support (11) is folded with respect to the second support (12) and rests on the second support (12), and
wherein the second support (12) can be connected to a tractor (112);
the tractor (112), wherein the second support (12) of the agricultural device is mounted on a front of the tractor (112);
an aerator (114) mounted on a rear of the tractor (112); and
a roller (116) mounted on the rear of the tractor (112) or on the aerator (114) and extending behind the aerator (114) in the forward driving direction of the tractor (112).

15. Machine combination according to claim (14),
wherein the roller (116) or the aerator (114) is provided with a seed supply apparatus (117) in order to spread seeds in a dosed manner onto soil to be cultivated.

16. Method for producing an agricultural device for soil cultivation, comprising:
producing a plurality of elongated supports (11, 12, 13), wherein soil cultivation tools (14) are mounted on each support, which engage the soil (15) in an operating position, wherein the plurality of elongated supports (11, 12, 13) comprise a first support (11), a second support (12) and a third support (13),
wherein the third support (13) is shiftable with respect to the second support (12) along a longitudinal direction of the elongated support (11, 12, 13) and wherein the first support (11) can be folded down with respect to the second support (12), and
wherein the first support (11) and the third support (13) are disposed in the operating position such that the soil cultivation tools (15) of the first support (11) and the third support (13) engage the soil, wherein the first support (11) and the third support (13) are disposed in a stowage position such that the third support (13) overlaps with the second support (12) and the first support (11) is folded with respect to the second support (12) and rests on the second support (12), and wherein the second support (12) can be connected to a tractor (112).

## Revendications

1. Appareil agricole pour le traitement de sol, aux caractéristiques suivantes:
une pluralité de supports allongés (11, 12, 13), sur chaque support étant placés des outils de traitement de sol (14) qui, dans une position de fonctionnement, viennent en prise avec le sol (15), la pluralité de supports allongés (11, 12, 13) présentant un premier support (11), un deuxième support (12) et un troisième support (13),
dans lequel le troisième support (13) est déplaçable par rapport au deuxième support (12) dans une direction longitudinale des supports allongés (11, 12, 13) et le premier support (11) pouvant être rabattu par rapport au deuxième support (12), et
dans lequel le premier support (11) et le troisième support (13) sont disposés, dans la position de fonctionnement, de sorte que les outils de traitement de sol (15) du premier support (11) et du troisième support (13) viennent en prise avec le sol,
dans lequel le premier support (11) et le troisième support (13) sont disposés, dans une position repliée, de sorte que le troisième support (13) vienne en recouvrement avec le deuxième support (12), et le premier support (11) soit replié par rapport au deuxième support (12) et repose sur le deuxième support (12), et
dans lequel le deuxième support (12) peut être connecté à un tracteur (112).

2. Appareil agricole selon la revendication 1,
dans lequel ledit premier support (11) est connecté pair l'intermédiaire d'une charnière (20) au deuxième support (12), ou dans lequel le troisième support (13) est connecté par l'intermédiaire d'une construction de rails et rouleaux (21) au deuxième support (12), dans lequel la construction de rails et rouleaux est conçue de sorte qu'elle présente un jeu, que le premier support (11) puisse, dans la position de travail, se déplacer d'au moins 20 cm vers le haut et vers le bas à son extrémité extérieure par rapport au deuxième support (12).

3. Appareil agricole selon l'une des revendications précédentes,
dans lequel le deuxième support (12) peut être connecté au tracteur (112) de sorte que le deuxième support (12) ne soit pas déplacé par rapport au premier support (11) lorsque le premier support (11) est amené de la position repliée à la position de travail.

4. Appareil agricole selon l'une des revendications précédentes,
dans lequel les outils de traitement de sol (14) sont des dents ou des couteaux d'aération et dans lequel l'appareil agricole est réalisé pour le traitement de prairies ou de terres agricoles.

5. Appareil agricole selon l'une des revendications précédentes,
dans lequel une hauteur maximale de l'appareil agricole en position repliée à partir d'un sol sur lequel se trouve l'appareil agricole est inférieure à 2,50 m.

6. Appareil agricole selon l'une des revendications précédentes,
dans lequel le deuxième support (12) présente au moins une roue de jauge (32, 33) et le premier support (11) ou le troisième support (13) présente chaque fois exactement une roue de jauge (34, 35), les roues de jauge étant réalisées de sorte que, dans la position de fonctionnement, elles roulent sur le sol (15).

7. Appareil agricole selon la revendication 6,
dans lequel chaque roue de jauge est munie d'un rail de dérivation dont le bord inférieur est disposé à une hauteur définie au-dessus du sol et qui est disposé, dans la direction de déplacement, devant la roue de jauge respective.

8. Appareil agricole selon l'une des revendications précédentes, présentant par ailleurs les caractéristiques suivantes:
un moyen d'actionnement à commande par énergie destiné à actionner le premier support (11) ou le troisième support (13), pour déplacer le troisième support (13) et pour rabattre le premier support (11), le moyen d'actionnement pouvant être commandé par une force électrique, une force mécanique ou de manière hydraulique.

9. Appareil agricole selon la revendication 8,
dans lequel le moyen d'actionnement est hydraulique et présente un premier entraînement à piston (40) pour déplacer le troisième support (13) par rapport au deuxième support (12) et un deuxième entraînement à piston (38) pour rabattre le premier support (11) par rapport au deuxième support (12).

10. Appareil agricole selon la revendication 9,
dans lequel le moyen d'actionnement présente une atténuation de point mort pour atténuer un mouvement de basculement du premier support (11) lorsque ce dernier se déplace lors du rabattement par le point mort.

11. Appareil agricole selon la revendication 1,
dans lequel le deuxième support (12) présente une largeur comprise entre 2 et 3 m, et dans lequel le premier support (11) et le troisième support (13) sont plus courts que le deuxième support (12) et présentent une largeur comprise entre 1,5 et 2,5 m.

12. Appareil agricole selon la revendication 9,
dans lequel le deuxième entraînement à piston (38) présente un piston (38a) et un manchon (38b), le piston ou le manchon étant fixé au premier support (11) par un premier moyen de fixation, et l'autre élément parmi le piston et le manchon étant fixé au deuxième support (12) par un deuxième moyen de fixation,
dans lequel le premier ou le deuxième moyen de fixation (55, 57) est réalisé de sorte que le premier support (11) puisse, dans la position de fonctionnement, être déplacé par rapport au deuxième support (12) contre une précontrainte (56).

13. Appareil agricole selon la revendication 6,
dans lequel la hauteur des outils de traitement de sol est réglable par des broches (60), chaque roue de jauge étant munie d'un réglage par broche (60).

14. Combinaison de machines aux caractéristiques suivantes:
un appareil agricole pour le traitement de sol (110), aux caractéristiques suivantes:
une pluralité de supports allongés (11, 12, 13), sur chaque support étant placés des outils de traitement de sol (14) qui, dans la position de fonctionnement, viennent en prise avec le sol (15), la pluralité de supports allongés (11, 12, 13) présentant un premier support (11), un deuxième support (12) et un troisième support (13),
dans laquelle le troisième support (13) est déplaçable par rapport au deuxième support (12) dans une direction longitudinale des supports allongés (11, 12, 13) et le premier support (11) pouvant être rabattu par rapport au deuxième support (12), et
dans laquelle le premier support (11) et le troisième support (13) sont disposés, dans la position de fonctionnement, de sorte que les outils de traitement de sol (15) du premier support (11) et du troisième support (13) viennent en prise avec le sol,
dans laquelle le premier support (11) et le troisième support (13) sont disposés, dans une position repliée, de sorte que le troisième support (13) vienne en recouvrement avec le deuxième support (12), et le premier support (11) soit replié par rapport au deuxième support (12), et
dans laquelle le deuxième support (12) peut être connecté à un tracteur (112),
le tracteur (112), le deuxième support (12) de l'appareil agricole étant placé sur une partie avant du tracteur (112);
un aérateur (114) qui est placé sur une partie arrière du tracteur (112); et
un rouleau (116) qui est placé sur une partie arrière du tracteur (112) ou sur l'aérateur (114) et s'étend, dans la direction de conduite en avant du tracteur (112), derrière l'aérateur (114).

15. Combinaison de machines selon la revendication 14,
dans laquelle le rouleau (116) ou l'aérateur (114) est muni d'un dispositif d'alimentation de semences (117) pour distribuer des semences de manière dosée sur un sol à traiter.

16. Procédé de fabrication d'un appareil agricole pour le traitement de sol, aux étapes suivantes consistant à:
fabriquer une pluralité de supports allongées (11, 12, 13), sur chaque support étant placés des outils de traitement de sol (14) qui, dans la position de fonctionnement, viennent en prise avec le sol (15), la pluralité de supports allongés (11, 12, 13) présentant un premier support (11), un deuxième support (12) et un troisième support (13),
dans lequel le troisième support (13) est déplaçable par rapport au deuxième support (12) dans une direction longitudinale des supports allongés (11, 12, 13) et le premier support (11) pouvant être rabattu par rapport au deuxième support (12), et
dans lequel le premier support (11) et le troisième support (13) sont disposés, dans la position de fonctionnement, de sorte que les outils de traitement de sol (15) du premier support (11) et du troisième support (13) viennent en prise avec le sol, dans lequel le premier support (11) et le troisième support (13) sont disposés, dans une position repliée, de sorte que le troisième support (13) vienne en recouvrement avec le deuxième support (12), et le premier support (11) soit replié par rapport au deuxième support (12), et dans lequel le deuxième support (12) peut être connecté à un tracteur (112).
